# EUROPEAN PATENT APPLICATION

(11) **EP 4 772 797 A1**
(43) Date of publication of application: **08.07.2026**
(21) Application number: 24887481.0
(22) Date of filing: 26.07.2024
(51) Int. Cl.: F24C 7/08, F24C 7/02, A47J 36/00

(54) **CAMERA SYSTEM AND COOKING DEVICE**

(30) Priority: 07.11.2023 CN 202311473330
(71) Applicant: Guangdong Midea Kitchen Appliances Manufacturing Co., Ltd., Foshan, Guangdong 528311 (CN)
(72) Inventor: SHI, Lilong, Foshan, Guangdong 528311 (CN); ZHONG, Xun, Foshan, Guangdong 528311 (CN); LU, Shumin, Foshan, Guangdong 528311 (CN); HUANG, Zhifei, Foshan, Guangdong 528311 (CN)
(74) Representative: Ran, Handong
(86) International application number: PCT/CN2024/107915
(87) International publication number: WO 2025/097859

(57) **Abstract**

The present application provides a camera system and a cooking device. The camera system is used for a cooking device, the cooking device comprises a box body and a camera mechanism arranged on the body of a heating cavity of the box body, the camera system comprises an air duct mechanism and a camera mechanism, and an air duct is formed in the air duct mechanism; and the camera mechanism is arranged at an air outlet of the air duct, wherein the air duct mechanism is located outside the top wall of the body of the heating cavity; and an air inlet of the air duct and the rear wall of the body of the heating cavity are arranged on the same side. The present application can improve the heat dissipation effect, reduce the effect of the temperature change in the heating cavity on the camera mechanism, and improve the reliability of the camera mechanism, thereby improving the intelligent identification performance of the cooking device, facilitating assembly and improving the aesthetics, reducing production costs, and improving the use experience of a user.

## Description

This application claims the priority of the Chinese patent application No. 202311473330.8, filed on November 7, 2023, and entitled "CAMERA SYSTEM AND COOKING DEVICE", the entire contents of which are incorporated herein by reference.

### TECHNICAL FIELD

The present application relates to the technical field of household appliances, and in particular to a camera system and a cooking device.

### BACKGROUND

Nowadays, various cooking devices have gradually become common kitchen household appliances in people's daily lives. With the continuous development of intelligent identification-related technologies, people's demand for intelligent identification of cooking devices has gradually emerged.

Intelligent identification functions require the use of camera mechanisms. In the related art, how to further reduce the impact of temperature rise in the heating cavity of cooking devices on camera mechanisms and improve the heat dissipation performance of camera mechanisms is one of the key issues that those skilled in the art have been focusing on.

### SUMMARY

The present application provides a camera system and a cooking device, which can improve the heat dissipation effect, reduce the impact of temperature changes in the heating cavity on the camera mechanism, improve the reliability of the camera mechanism, thereby enhancing the intelligent identification performance of the cooking device, facilitating assembly, improving aesthetics, reducing production costs, and enhancing user experience.

To solve the above technical problem, the present application provides a camera system for a cooking device. The cooking device includes a box body and a camera mechanism disposed on the top wall of the cavity of the heating cavity of the box body. The camera system may include an air duct mechanism and a camera mechanism; the air duct mechanism is defining an air duct, and the camera mechanism is arranged at the air outlet of the air duct. Wherein the air duct mechanism is positioned outside the top wall of the cavity of the heating cavity, and the air inlet of the air duct is disposed on the same side as the rear wall of the cavity of the heating cavity.

In some embodiments, the air duct includes a first air duct and a second air duct, and the air duct mechanism includes a housing, a fan and an air guide pipe. The housing defining the first air duct, and the air inlet of the first air duct acting as the air inlet of the air duct; the fan is disposed in the first air duct; the air guide pipe defining the second air duct in fluid communication with the first air duct, and the air outlet of the second air duct acting as the air outlet of the air duct.

In some embodiments, the first air duct includes a first sub-air duct and a first accommodating cavity; the first accommodating cavity is further in communication with the external environment, and the first sub-air duct is further in communication with the second air duct. The air duct mechanism further includes a fan bracket disposed in the first accommodating cavity, and the fan bracket defining a second accommodating cavity; the fan is arranged in the second accommodating cavity, and the second accommodating cavity defining an air inlet in communication with the first accommodating cavity and an air outlet in communication with the air guide pipe.

In some embodiments, the fans include a DC (direct-current) fan, and a negative pressure cavity in communication with the second accommodating cavity is formed between the fan bracket and the inner wall of the first accommodating cavity. Wherein the negative pressure cavity is positioned at an end of the DC fan, and the air outlet of the second accommodating cavity is positioned at the outer peripheral side of the DC fan.

In some embodiments, the camera mechanism includes a mounting mechanism and a camera assembly; the mounting mechanism is mounted at the mounting hole of the heating cavity, and the camera assembly is mounted on the mounting mechanism.

In some embodiments, the mounting mechanism includes a mounting base disposed at the air outlet of the air duct, and the camera assembly is mounted on the mounting base.

In some embodiments, the mounting base defining a first mounting cavity and a second mounting cavity which are in communication; the first mounting cavity defining an air outlet, and the second mounting cavity defining an air inlet. The first mounting cavity is used for mounting the camera assembly, and the second mounting cavity is used for mounting a control assembly.

In some embodiments, an arc-shaped deflector is disposed in the first mounting cavity to form an arc-shaped air duct in the first mounting cavity.

In some embodiments, the camera mechanism is arranged on the same side as the opening of the cavity of the heating cavity.

To solve the above technical problem, the present application further provides a cooking device, which includes a box body and the above-mentioned camera system; the box body defining a heating cavity, and the camera system is disposed in the box body.

The beneficial effects of the present application are as follows. The camera mechanism of the present application can collect food images, which can improve the intelligent identification performance of the cooking device; the camera mechanism is arranged at the air outlet of the air duct mechanism, which can directly deliver cold air to the position requiring cooling, improve the high-temperature resistance of the camera mechanism, further enhance the anti-interference ability of the camera mechanism, and boost the reliability of the camera mechanism; the air duct mechanism is positioned outside the top wall of the cavity of the heating cavity, which can reduce the impact of temperature changes in the heating cavity on the air duct mechanism and improve the anti-interference ability of the air duct mechanism, and its arrangement outside the top wall facilitates assembly and reduces production costs. Furthermore, the air inlet of the air duct mechanism is disposed on the same side as the rear wall of the cavity of the heating cavity, so that cold air flows in from the rear wall of the cavity of the heating cavity, and the air inlet does not occupy the space on the opening side of the cavity of the heating cavity, which can reduce the impact of the air inlet on the daily use of users and improve the aesthetic appearance. Therefore, the present application can improve the heat dissipation effect, reduce the impact of temperature changes in the heating cavity on the camera mechanism, and improve the reliability of the camera mechanism, thereby enhancing the intelligent identification performance of the cooking device, facilitating assembly, improving the aesthetic appearance, reducing the production cost, and enhancing the user experience.

### BRIEF DESCRIPTION OF THE DRAWINGS

To more clearly illustrate the technical solutions in the embodiments of the present application, the following will briefly introduce the accompanying drawings required for describing the embodiments. Obviously, the accompanying drawings in the following description are only some embodiments of the present application. For those skilled in the art, other drawings can be obtained according to these drawings without creative work. Among them:
FIG. 1 is a schematic side view of an embodiment of a cooking device of the present application;
FIG. 2 is a schematic top view of an embodiment of a cooking device of the present application;
FIG. 3 is a schematic structural view of a part of a camera system according to an embodiment of the present application;
FIG. 4 is a schematic structural view of a part of an air duct mechanism of the present application;
FIG. 5 is an exploded schematic view of the embodiment shown in FIG. 4.

### DETAILED DESCRIPTIONS

The technical solutions in the embodiments of the present application will be clearly and completely described below with reference to the accompanying drawings. Obviously, the described embodiments are only a part of the embodiments of the present application, not all of them. Based on the embodiments in the present application, all other embodiments obtained by those skilled in the art without creative work shall fall within the protection scope of the present application.

The terms "first", "second", etc. in the present application are used to distinguish different objects, not to describe a specific order. In addition, the terms "including" and "having" and any variations thereof are intended to cover non-exclusive inclusion.

It should be noted that when an element is fixed to another element, it includes directly fixing the element to the other element or fixing the element to the other element through at least one intermediate element. When an element is connected to another element, it includes directly connecting the element to the other element or connecting the element to the other element through at least one intermediate element.

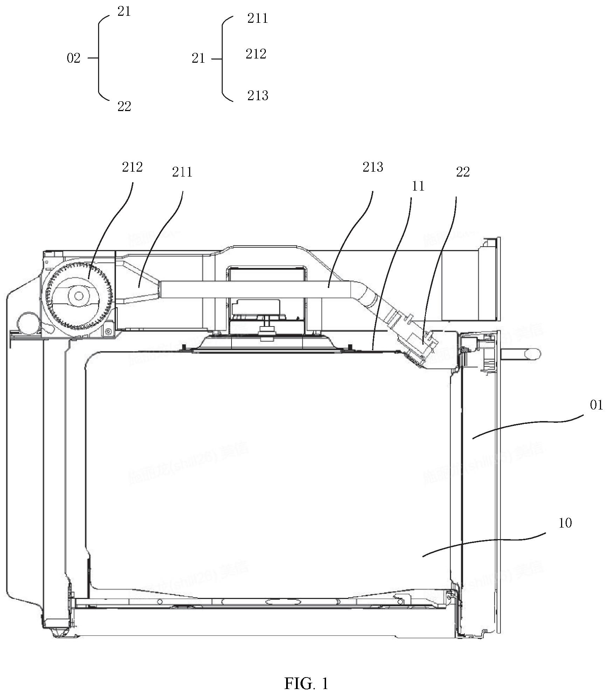

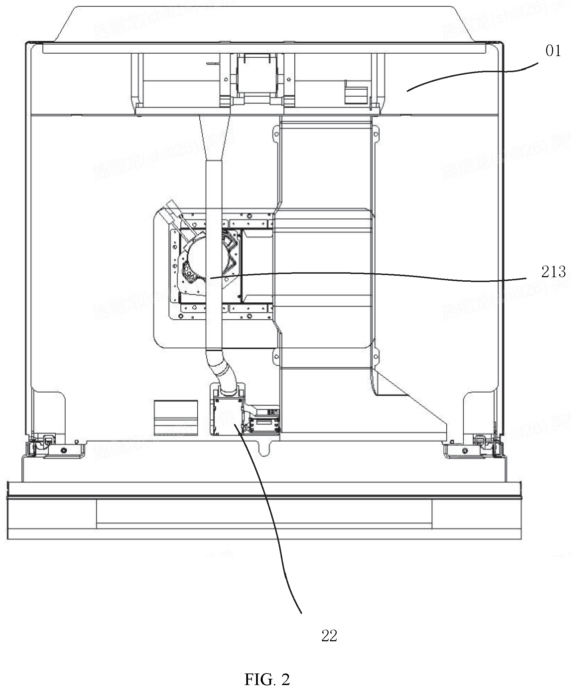

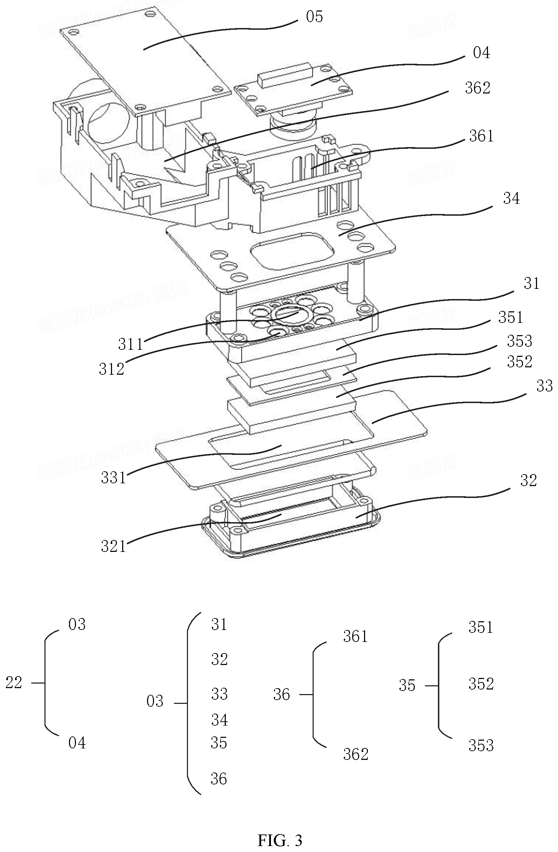

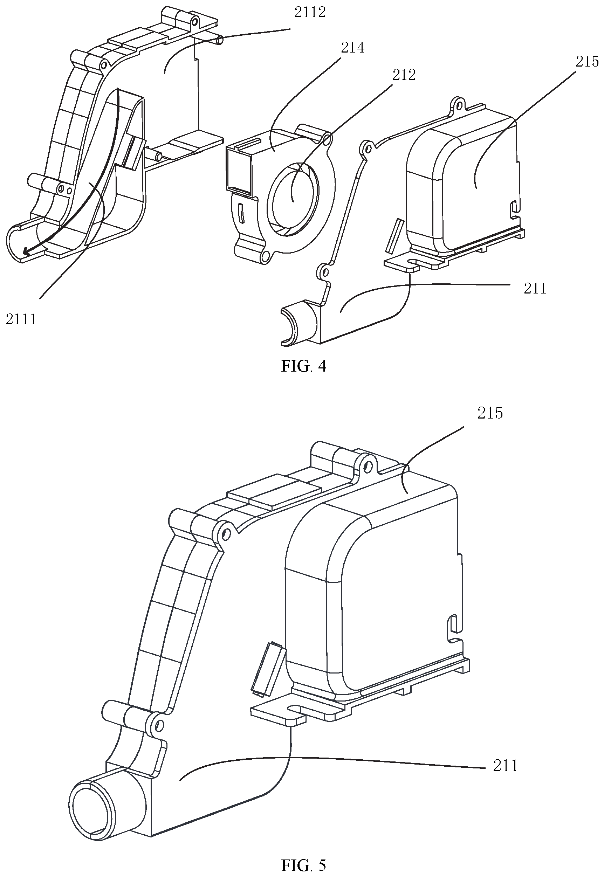

The present application first proposes a cooking device. As shown in FIGS. 1 to 3, FIG. 1 is a schematic side view of an embodiment of a cooking device of the present application, FIG. 2 is a schematic top view of an embodiment of a cooking device of the present application, FIG. 3 is a schematic structural view of a part of a camera system according to an embodiment of the present application, FIG. 4 is a schematic structural view of a part of an air duct mechanism of the present application, and FIG. 5 is an exploded schematic view of the embodiment shown in FIG. 4. The cooking device includes a box body 01 and a camera system 02; the box body 01 is formed with a heating cavity 10; the camera system 02 is arranged in the box body 01 and includes an air duct mechanism 21 and a camera mechanism 22; the air duct mechanism 21 is formed with an air duct; the camera mechanism 22 is arranged on the top wall 11 of the cavity of the heating cavity 10 of the box body 01 and is located at the air outlet of the air duct; wherein the air duct mechanism 21 is located outside the top wall 11 of the cavity of the heating cavity 10, the air inlet of the air duct is arranged on the same side as the rear wall of the cavity of the heating cavity 10, and the camera mechanism 22 is arranged on the same side as the opening of the cavity of the heating cavity 10.

The camera system 02 of this embodiment includes an air duct mechanism 21 and a camera mechanism 22. The air duct mechanism 21 is used to guide cold air for the camera mechanism 22. The air duct mechanism 21 is located outside the top wall 11 of the cavity of the heating cavity 10 and inside the box body 01. The air inlet of the air duct is arranged on the same side as the rear wall of the cavity of the heating cavity 10. Cold air flows in from the rear wall of the cavity of the heating cavity 10, passes through the air duct mechanism 21, and flows to the camera mechanism 22; the camera mechanism 22 is located on the top wall 11 of the cavity of the heating cavity 10 and at the air outlet of the air duct, and is arranged on the same side as the opening of the cavity of the heating cavity 10 (usually the side where the oven door of the cooking device is located).

The beneficial effects of the above arrangement are as follows: The camera mechanism 22 can collect food images, which can improve the intelligent identification performance of the cooking device; the camera mechanism 22 is arranged at the air outlet of the air duct mechanism 21, which can directly deliver cold air to the place needing cooling, improve the high-temperature resistance of the camera mechanism 22, further enhance the anti-interference ability of the camera mechanism 22, and improve the reliability of the camera mechanism 22; the air duct mechanism 21 is located outside the top wall 11 of the cavity of the heating cavity 10, which can reduce the impact of temperature changes in the heating cavity 10 on the air duct mechanism 21, improve the anti-interference ability of the air duct mechanism 21, and is convenient for assembly and reduces production costs when placed outside the top wall 11; further, the air inlet of the air duct mechanism 21 is arranged on the same side as the rear wall of the cavity of the heating cavity 10, so that cold air flows in from the rear wall of the cavity of the heating cavity 10, and the air inlet does not occupy the space on the opening side of the cavity of the heating cavity 10, which can reduce the impact of setting the air inlet on the daily use of users and improve aesthetics. Therefore, this embodiment can improve the heat dissipation effect, reduce the impact of temperature changes in the heating cavity 10 on the camera mechanism 22, improve the anti-interference performance of the camera mechanism 22, thereby enhancing the intelligent identification performance of the cooking device, facilitating assembly, improving aesthetics, reducing production costs, and enhancing user experience.

It should be noted that the camera system 02 can be used for a microwave-steam-oven combination. The microwave-steam-oven combination includes a box body 01 and a camera system 02; the box body 01 is formed with a heating cavity 10; the camera system 02 is arranged in the box body 01. The camera system 02 can also be used for other similar cooking devices, such as microwave ovens, steam ovens, or ovens.

In an embodiment, the camera mechanism 22 is arranged on the same side as the opening of the cavity of the heating cavity 10, which can make the camera mechanism 22 closer to the viewing angle of the user when checking the food cooking status at the oven door, thereby enabling the images collected by the camera mechanism 22 to be closer to the user's daily use scenarios and improving user experience.

In another embodiment, the camera mechanism is arranged on the same side as the side wall of the cavity of the heating cavity, which can reduce the distance between the camera mechanism and the air inlet of the air duct mechanism, thereby reducing the cold energy consumption of cold air in the air duct mechanism, further improving the heat dissipation efficiency of heat exchange between the camera mechanism and cold air, and thus improving the heat dissipation performance of the camera system.

In an embodiment, the camera mechanism 22 can be arranged at the middle position of the top of the opening side of the cavity of the heating cavity 10, which can make the camera mechanism 22 closer to the viewing angle of the user when checking the food cooking status at the oven door, thereby enabling the images collected by the camera mechanism 22 to be closer to the user's daily use scenarios and improving user experience.

In an embodiment, the air duct includes a first air duct and a second air duct; the air duct mechanism 21 includes a housing 211, a fan 212, and an air guide pipe 213; the housing 211 is formed with the first air duct, and the air inlet of the first air duct acting as the air inlet of the air duct; the fan 212 is arranged in the first air duct; the air guide pipe 213 is formed with the second air duct communicated with the first air duct, and the air outlet of the second air duct acting as the air outlet of the air duct.

In an embodiment, the fan 212 is arranged in the housing 211. The fan 212 works to control cold air to enter the first air duct from the air inlet, then enter the second air duct through the first air duct, and the cold air enters the camera mechanism 22 after being output from the second air duct.

The beneficial effects of the above arrangement are as follows: The arrangement of the fan 212 can provide power for the introduction of cold air, improving the convenience of air guiding of the air duct mechanism 21; the second air duct formed in the air guide pipe 213 can smoothly introduce the cold air in the first air duct into the camera mechanism 22, so the arrangement of the air guide pipe 213 can improve the installation convenience and the flexibility when setting the position of the camera mechanism 22; the fan 212 is arranged in the first air duct, so that the fan 212 can be close to the air inlet of the first air duct, improving the air guiding performance of the fan 212, and further improving the heat dissipation performance of the air duct mechanism 21.

In other embodiments, the relative position between the air duct mechanism and the camera mechanism can also be changed, so that the air outlet of the first air duct of the air duct mechanism can be directly connected to the camera mechanism, reducing the distance from the air inlet to the camera mechanism, thereby reducing the cold energy consumption of cold air when guiding in the air duct, further improving the heat exchange efficiency between cold air and the camera mechanism, further improving the heat dissipation effect of the air duct mechanism on the camera mechanism, and further improving the high-temperature resistance of the camera system.

In an embodiment, the first air duct includes a first sub-air duct 2111 and a first accommodating cavity 2112; the first accommodating cavity 2112 is further communicated with the external environment, and the first sub-air duct 2111 is further communicated with the second air duct; the air duct mechanism 21 further includes a fan bracket 214 arranged in the first accommodating cavity 2112, and the fan bracket 214 defining a second accommodating cavity; the fan 212 is arranged in the second accommodating cavity, and the second accommodating cavity defining an air inlet communicated with the first accommodating cavity 2112 and an air outlet communicated with the air guide pipe 213.

In an embodiment, the first accommodating cavity 2112 is communicated with the first sub-air duct 2111 and the external environment. Under the action of the fan 212, cold air enters the first accommodating cavity 2112 from the external environment, then enters the second accommodating cavity, and then is guided out to the first sub-air duct 2111 through the air outlet of the second accommodating cavity, then flows into the second air duct formed by the air guide pipe 213, and the cold air enters the camera mechanism 22 after being output from the second air duct.

The beneficial effects of the above arrangement are as follows: The first sub-air duct 2111 and the first accommodating cavity 2112 are formed in the first air duct, which is convenient for accommodating the fan bracket 214 and the fan 212; the second accommodating cavity in the fan bracket 214 is convenient for accommodating the fan 212, and can make the cold air introduced by the fan flow out to the second air duct more smoothly through the first sub-air duct 2111, reducing the energy loss of cold air during air guiding.

In an embodiment, the fan 212 includes a DC fan; a negative pressure cavity 215 communicated with the second accommodating cavity is formed between the fan bracket 214 and the inner wall of the first accommodating cavity 2112; wherein the negative pressure cavity 215 is located at the end of the DC fan, and the air outlet of the second accommodating cavity is located at the outer peripheral side of the DC fan.

A DC fan refers to a fan that converts DC electrical energy into mechanical energy by inputting DC electrical energy to rotate a DC motor to drive the fan impeller to rotate. DC fans have low loss, high efficiency, and their speed regulation control is not only simple but also has better speed regulation performance, which can improve the heat dissipation efficiency and use convenience of the air duct mechanism 21; the negative pressure cavity 215 is located at the end of the DC fan, and the air outlet of the second accommodating cavity is located at the outer peripheral side of the DC fan, which is convenient for the DC fan to throw cold air out to the first sub-air duct 2111, facilitating the smooth flow of cold air into the first sub-air duct 2111, and this structure has low cost, large air volume, low noise, low energy consumption, stable operation, long service life, and better cooling and ventilation effects.

In an embodiment, the camera mechanism 22 includes a mounting mechanism 03 and a camera assembly 04; the mounting mechanism 03 is mounted at the mounting hole of the heating cavity 10; the camera assembly 04 is mounted on the mounting mechanism 03.

In an embodiment, the camera assembly 04 is fixed at the mounting hole of the heating cavity 10 through the mounting mechanism 03, which can improve the positional stability of the camera assembly 04 and the anti-interference ability of the camera assembly 04, such as anti-microwave interference, anti-high temperature interference, etc.

In other embodiments, the camera mechanism may not include an additional mounting mechanism. The camera assembly is arranged at the air outlet, and the camera assembly can be directly arranged on the mounting hole of the heating cavity, such as fixed by bolts and nuts, which can reduce the assembly components of the product and lower the cost.

In an embodiment, the mounting mechanism 03 includes a first mounting part 31, a second mounting part 32, and a first heat insulation part 33; the first mounting part 31 defining a first through hole 311, and the camera assembly 04 is arranged on the side of the first mounting part 31 away from the second mounting part 32; the second mounting part 32 defining a second through hole 321; the first heat insulation part 33 defining a third through hole 331, arranged between the first mounting part 31 and the second mounting part 32, and the third through hole 331 is respectively communicated with the first through hole 311 and the second through hole 321 to form a camera hole.

With the development of technological and intelligent hardware, intelligent cooking products have become the development trend of future cooking products. At present, there have been ovens, steam ovens and other products with intelligent identification functions on the market, but micro-steam-oven combination products with intelligent identification have not been developed. Different from ordinary ovens, products integrating microwave and steam functions need to solve the problems of steam sealing and microwave leakage of the product to realize the intelligent identification function, and also need to solve the problems of normal shooting and heat dissipation of the camera assembly 04.

In the related art, the camera assembly 04 in ovens or steam ovens is generally mounted on the oven door of the whole machine. Since ovens or steam ovens do not need to consider the problem of microwave leakage, the camera assembly 04 can be directly fixedly mounted on the oven door. However, for micro-steam-oven combinations, a metal door body to prevent microwave leakage needs to be arranged on the oven door. How to design a mounting mechanism 03 for the camera assembly 04 of a micro-steam-oven combination, so that the camera assembly 04 can meet the functional requirements of the product for sealing, microwave leakage prevention, etc. when realizing the normal shooting function, and can improve the heat dissipation and anti-interference of the camera assembly 04, is an urgent problem to be solved by those skilled in the art.

It should be noted that the first mounting part 31 and the second mounting part 32 are respectively located on both sides of the mounting hole of the heating cavity 10. The mounting mechanism 03 can be fixed on the cavity of the heating cavity 10 by connecting the first mounting part 31 and the second mounting part 32.

The beneficial effects of the above arrangement are as follows: The first through hole 311, the second through hole 321, the third through hole 331, and the mounting hole are through to form a camera hole. The camera assembly 04 is arranged on the mounting mechanism 03. The arrangement of the camera hole can facilitate the camera assembly 04 to take photos through the camera hole to realize the intelligent identification function; the arrangement of the first heat insulation sheet can improve the heat insulation effect between the first mounting part 31 and the second mounting part 32, thereby improving the heat insulation performance of the mounting mechanism 03, and further reducing the interference impact of temperature changes in the heating cavity 10 on the camera assembly 04; the first mounting part 31 and the second mounting part 32 are respectively located on both sides of the mounting hole of the heating cavity 10, the first heat insulation part 33 is arranged between the first mounting part 31 and the second mounting part 32, and the first mounting part 31 and the second mounting part 32 are fixedly connected, so that the entire mounting mechanism 03 can be fixedly mounted on the mounting hole, which can improve the structural stability and sealing performance of the mounting mechanism 03, further improve the stability of the camera assembly 04, further improve the photographing effect, further improve the intelligent identification effect of the product, and improve user experience; the camera assembly 04 is arranged on the side of the first mounting part 31 away from the second mounting part 32, which can reduce the impact of temperature changes in the heating cavity 10 on the camera assembly 04. Therefore, the design scheme of this embodiment can improve the sealing performance of the mounting hole, improve the stability of the mounting mechanism 03, further improve the structural stability and photographing effect of the camera assembly 04, further improve the intelligent identification function of the cooking device, and improve user experience.

It should be noted that the mounting mechanism 03 of the present application can also be used for other cooking devices such as microwave ovens, steam ovens, or ovens.

In an embodiment, the first mounting part 31 and the second mounting part 32 are metal structures, which can play a role in reducing microwave leakage, further improving the microwave leakage prevention ability of the product, and can improve the anti-interference ability of the camera assembly 04 and the photographing effect.

In an embodiment, the first mounting part 31 and the second mounting part 32 are aluminum alloy structures, which can reduce production costs.

In an embodiment, the first mounting part 31 and the second mounting part 32 can be fixed by screws, which can improve the stability of the mounting mechanism 03.

In other embodiments, the first mounting part and the second mounting part can also be fixed by clamping, welding, pasting, etc., which is not in an embodiment limited.

In other embodiments, the first heat insulation part can also be replaced with a metal mesh, and the arrangement of the metal mesh can further reduce the microwave leakage of the heating cavity, thereby improving the anti-interference ability of the camera assembly.

In an embodiment, the mounting mechanism 03 further includes a second heat insulation part 34 arranged on the side of the first mounting part 31 away from the second mounting part 32.

In an application scenario, heat insulation cotton is arranged outside the heating cavity 10. At the mounting hole of the heating cavity 10, the heat insulation cotton defining a fifth through hole. The first mounting part 31 is located in the fifth through hole and abuts against the side wall of the fifth through hole. The second heat insulation part 34 is arranged on the side of the first mounting part 31 away from the second mounting part 32, abuts against the first mounting part 31, and abuts against the side wall of the fifth through hole, that is, a part of the side of the second heat insulation part 34 close to the heating cavity 10 abuts against the side of the heat insulation cotton away from the heating cavity 10. The camera assembly 04 is arranged on the side of the second heat insulation part 34 away from the first mounting part 31.

The beneficial effects of the above arrangement are as follows: The mounting mechanism 03 defining a second heat insulation part 34. The second heat insulation part 34 is arranged outside the heating cavity 10 and on the side of the first mounting part 31 away from the second mounting part 32, which can reduce the heat conduction between the first mounting part 31 and the camera assembly 04, improve the heat insulation effect, reduce the interference of temperature rise in the heating cavity 10 on the camera assembly 04, and improve the anti-interference ability of the camera assembly 04.

In an embodiment, the second heat insulation part 34 is an integrally formed structure, and a sixth through hole is arranged in the middle thereof for forming a camera hole, which is convenient for the camera assembly 04 to take photos and videos through the camera hole. In other embodiments, the second heat insulation part 34 can also be formed by splicing around the first through hole 311, which is not in an embodiment limited.

In an embodiment, a plurality of mounting columns is arranged on the side of the first mounting part 31 away from the second mounting part 32, and a plurality of openings corresponding to the mounting columns are arranged on the second heat insulation part 34. The mounting columns pass through the corresponding openings to fix the second heat insulation part 34 on the side of the first mounting part 31 away from the second mounting part 32. This arrangement can improve the positional stability of the second heat insulation part 34, thereby improving its heat insulation effect. In other embodiments, the heat insulation cotton can also be fixed on the first mounting part 31 by other means, such as pasting.

In an embodiment, the second heat insulation part 34 can be a mica sheet. Mica sheets have good high-temperature resistance and heat insulation, can withstand insulation requirements in high-temperature environments, and can effectively isolate heat and noise.

In an embodiment, a mounting groove is formed between the side wall of the first mounting part 31 and the side wall of the second mounting part 32 for arranging the side wall of the mounting hole.

After the first mounting part 31 and the second mounting part 32 are clamped and fixed, a mounting groove can be formed between the side wall of the first mounting part 31 and the side wall of the second mounting part 32. This mounting groove can accommodate the side wall of the mounting hole and tightly abut against it. In an embodiment, the side wall of the first mounting part 31 abuts against the inner side wall of the heating cavity 10, that is, the side of the mounting hole's side wall facing the heating cavity 10; the side wall of the second mounting part 32 abuts against the outer side wall of the heating cavity 10, that is, the side of the mounting hole's side wall away from the heating cavity 10. This arrangement can improve the sealing performance at the mounting hole, reduce the risk of microwave leakage at the mounting hole, and improve the anti-interference ability of the camera assembly 04.

In other embodiments, the first mounting part and the second mounting part can also be welded or bonded on the side wall of the mounting hole of the heating cavity 10.

In an embodiment, a groove is formed on the side of the second mounting part 32 close to the first mounting part 31, and the mounting mechanism 03 further includes a transparent heat insulation assembly 35 arranged in the groove.

In an embodiment, a groove is formed on the side of the second mounting part 32 close to the first mounting part 31, and the transparent heat insulation assembly 35 is arranged in the groove and abuts against the inner wall of the groove, that is, the transparent heat insulation assembly 35 is arranged in the camera hole.

The beneficial effects of the above arrangement are as follows: The transparent heat insulation assembly 35 is arranged in the camera hole, which can isolate the high temperature in the cavity while enabling the camera assembly 04 to take photos and videos through the camera hole, and can also play a role of steam sealing. This not only can reduce the impact of the camera mechanism 22 on the internal heating environment of the cooking device, but also can improve the anti-interference ability of the camera assembly 04 and the service life of the camera assembly 04.

In an embodiment, the first part of the second mounting part 32 is located inside the heating cavity 10, the second part of the second mounting part 32 extends through the mounting hole in a direction away from the heating cavity 10, and the outer side wall of the second part of the second mounting part 32 abuts against the side wall of the mounting hole, the side wall of the third through hole 331, and the inner side wall of the first mounting part 31, wherein the first mounting part 31 is arranged outside the heating cavity 10. This arrangement can further improve the stability and sealing effect of the mounting mechanism 03, and then can reduce microwave leakage, improve the sealing performance and safety of the product; and the second part of the second mounting part 32 extends through the mounting hole in a direction away from the heating cavity 10 and is clamped with the first mounting part 31, which can improve the assembly convenience of the product.

In other embodiments, a groove can also be formed on the side of the first mounting part close to the second mounting part, and the mounting mechanism further includes a transparent heat insulation assembly arranged in the groove. The first part of the first mounting part is located outside the heating cavity, the second part of the first mounting part extends through the mounting hole in a direction toward the heating cavity, and the outer side wall of the second part of the first mounting part tightly abuts against the side wall of the mounting hole, the side wall of the third through hole, and the inner side wall of the second mounting part, wherein the second mounting part is arranged inside the heating cavity. This arrangement can also improve the stability and sealing effect of the mounting mechanism, and then can reduce microwave leakage, improve the sealing performance and safety of the product.

In an embodiment, the transparent heat insulation assembly 35 includes a first glass sheet 351, a second glass sheet 352, and a first sealing ring 353; the first glass sheet 351 is arranged away from the first mounting part 31; the second glass sheet 352 is arranged on the side of the first glass sheet 351 away from the first mounting part 31; the first sealing ring 353 is arranged between the first glass sheet 351 and the second glass sheet 352.

In an embodiment, the transparent heat insulation assembly 35 is composed of a first glass sheet 351, a second glass sheet 352, and a first sealing ring 353. The side walls of the first glass sheet 351 and the second glass sheet 352 abut against the side wall of the groove to form a sealing structure; the first glass sheet 351 is arranged on the side of the first mounting part 31 close to the heating cavity 10, arranged away from the first mounting part 31 and abuts against the first mounting part 31 to form a sealing structure; the second glass sheet 352 is arranged on the side of the first glass sheet 351 away from the first mounting part 31, and the second glass sheet 352 abuts against the second mounting part 32 to form a sealing structure; the first sealing ring 353 is arranged between the first glass sheet 351 and the second glass sheet 352, and abuts against the first glass sheet 351 and the second glass sheet 352 respectively.

The beneficial effects of the above arrangement are as follows: The first glass sheet 351 is arranged away from the first mounting part 31, and the second glass sheet 352 is arranged on the side of the first glass sheet 351 away from the first mounting part 31, so that the transparent heat insulation assembly 35 can be enclosed in the groove by the first mounting part 31 and the second mounting part 32, which can protect the first glass sheet 351 and the second glass sheet 352 and improve their anti-interference ability; the side walls of the first glass sheet 351 and the second glass sheet 352 abut against the side wall of the groove to form a sealing structure, and the first glass sheet 351 abuts against the first mounting part 31 to form a sealing structure, and the second glass sheet 352 abuts against the second mounting part 32 to form a sealing structure, which can enhance the sealing effect between the transparent heat insulation assembly 35 and the groove, and can form a hollow glass structure to further improve the heat insulation effect; further, the first sealing ring 353 is arranged between the first glass sheet 351 and the second glass sheet 352, and abuts against the first glass sheet 351 and the second glass sheet 352 respectively, which can further enhance the sealing effect between the transparent heat insulation assembly 35 and the groove, and can enhance the stability of the hollow glass structure, and further improve the heat insulation effect without affecting the function of the camera hole.

Further, the first mounting part 31 and the second mounting part 32 are clamped, which can be used to fix the transparent heat insulation assembly 35, and the assembly composed of the transparent heat insulation assembly 35, the first mounting part 31, and the second mounting part 32 is integrally arranged on the side of the camera assembly 04 close to the heating cavity 10, which can improve the anti-interference ability of the camera assembly 04, and further improve the overall heat insulation effect and microwave leakage prevention effect of the camera mechanism 22.

In an embodiment, both the first glass sheet 351 and the second glass sheet 352 are low-emissivity glass. Low-emissivity glass is a film product coated with multiple layers of metal or other compounds on the glass surface. Its coating has the characteristics of high transmittance to visible light and high reflectivity to mid and far infrared rays, making it have excellent heat insulation effect and good light transmittance compared with ordinary glass and traditional architectural coated glass.

In an embodiment, the first sealing ring 353 can be a silicone ring. Silicone is a rubber material. Silicone rings have excellent heat resistance, low-temperature elasticity, and particularly excellent oxidation and ozone resistance. Using silicone rings can improve the service life and sealing performance of the first sealing ring 353.

In other embodiments, the transparent heat insulation assembly can also only include glass sheets or adopt other light-transmitting and heat-insulating materials, which is not In an embodiment limited.

In an embodiment, the mounting mechanism 03 can further include a second sealing ring. A mounting groove is formed between the second mounting part 32 and the inner wall of the heating cavity 10, and a second sealing ring is arranged in the mounting groove to improve the sealing effect between the second mounting part 32 and the heating cavity 10 and the sealing performance at the mounting hole.

In an embodiment, the second sealing ring can be a silicone sealing ring, and its working principle and structure can refer to the above-mentioned first sealing ring 353.

In an embodiment, the first mounting part 31 defining a plurality of fourth through holes 312 surrounding the periphery of the first through hole 311.

In an embodiment, the first mounting part 31 defining a plurality of fourth through holes 312 around the periphery of the first through hole 311. The fourth through holes 312 can be used for heat dissipation, thereby reducing the interference impact of temperature rise in the heating cavity 10 on the camera assembly 04 and improving the performance stability of the camera assembly 04.

In an embodiment, the first through hole 311 can be a circular hole with a diameter of 5-7mm (for example, 5mm, 6mm, 7mm), and the camera assembly 04 can take photos through the first through hole 311.

In an embodiment, except for the first through hole 311 and the fourth through hole 312, the other parts of the first mounting part 31 are solid structures with no other opening designs. The first mounting part 31 is a metal structure, and this design can enhance the microwave leakage prevention ability of the mounting mechanism 03.

In another embodiment, the plurality of fourth through holes can be circular holes with a diameter of 0.1-2mm (for example, 0.15mm, 0.123mm, 0.23mm, 0.55mm, 0.7mm, 0.886mm, 0.94mm, 1.23mm, 1.03mm, 1.5mm, 1.9mm, 2mm), which can be used for heat dissipation.

In other embodiments, based on the specifications and heat dissipation requirements of the camera assembly, the first through hole and the fourth through hole can also be of other sizes or shapes, which is not in an embodiment limited.

In an embodiment, the mounting mechanism 03 includes a mounting base 36 arranged at the air outlet of the air duct, and the camera assembly 04 is mounted on the mounting base 36.

In an application scenario, the mounting mechanism 03 includes both a mounting base 36, a first mounting part 31, and a second mounting part 32. The mounting base 36 is arranged on the side of the first mounting part 31 away from the second mounting part 32, and the mounting base 36 is connected to the first mounting part 31 and fixed on the first mounting part 31. The mounting base 36 can be used to fix the camera assembly 04 on the first mounting part 31. The arrangement of the mounting base 36 can further protect the camera assembly 04, improve the positional stability and anti-interference ability of the camera assembly 04.

In an embodiment, a plurality of mounting columns is arranged on the first mounting part 31, and the mounting base 36 is fixedly connected to the first mounting part 31 through the mounting columns. In other embodiments, the mounting base 36 and the first mounting part 31 can also be fixed by other means, such as pasting.

In an application scenario, a second heat insulation part 34 is further arranged between the mounting base 36 and the first mounting part 31. This arrangement can improve the anti-interference ability of the camera assembly 04 and reduce the impact of high temperature in the heating cavity 10 on the camera assembly 04.

In other embodiments, the mounting mechanism 03 can only include a mounting base 36 arranged at the air outlet of the air duct, and the camera assembly 04 is mounted on the mounting base 36.

In an embodiment, the camera assembly 04 of the camera mechanism 22 is arranged on the mounting base 36 of the mounting mechanism 03. The structure of the mounting base 36 can be adapted to the camera assembly 04, which can improve the protection effect on the camera assembly 04, improve the positional stability of the camera assembly 04, and improve the anti-interference ability of the camera assembly 04.

In an embodiment, the mounting base 36 defining a first mounting cavity 361 and a second mounting cavity 362 which are communicated; the first mounting cavity 361 defining an air outlet, and the second mounting cavity 362 defining an air inlet; the first mounting cavity 361 is used for mounting the camera assembly 04, and the second mounting cavity 362 is used for mounting the control assembly 05.

In an embodiment, the mounting base 36 defining a first mounting cavity 361 and a second mounting cavity 362 which are communicated. Cold air can enter the mounting base 36 through the air inlet of the second mounting cavity 362, pass through the second mounting cavity 362 and the first mounting cavity 361, and then flow out of the mounting base 36 through the air outlet. The control assembly 05 acting as a controller of the camera assembly 04 and can control the operation of the camera assembly 04.

The beneficial effects of the above arrangement are as follows: The second mounting cavity 362 is used for arranging the control assembly 05, which can protect the control assembly 05 and improve the anti-external interference ability of the control assembly 05; the first mounting cavity 361 is used for arranging the camera assembly 04, which can protect the camera assembly 04 and improve the anti-external interference ability of the camera assembly 04; the first mounting cavity 361 is communicated with the second mounting cavity 362, and defining an air outlet and an air inlet, which can guide cold air to dissipate heat for the camera assembly 04 and the control assembly 05, further reduce the interference of high temperature in the heating cavity 10 on the camera assembly 04 and the control assembly 05, and improve the service life of the camera assembly 04 and the control assembly 05.

In an embodiment, the mounting base 36 is a plastic structure, which has safe and reliable structure, good stability, high manufacturability, and can reduce production costs.

In an embodiment, an arc-shaped deflector is arranged in the first mounting cavity 361 to form an arc-shaped air duct in the first mounting cavity 361.

The air inlet and the air outlet of the first mounting cavity 361 are not in a straight line. An arc-shaped deflector is arranged in the first mounting cavity 361 to form an arc-shaped air duct in the first mounting cavity 361. The arc-shaped air duct is respectively communicated with the air inlet and the air outlet to make the air flow more smoothly and improve the heat dissipation effect of the camera assembly 04.

In another embodiment, the mounting base can only be provided with a first mounting cavity for mounting the camera assembly, and the first mounting cavity defining an air inlet and an air outlet.

In an embodiment, the mounting base can only be provided with a first mounting cavity for mounting the camera assembly, and the first mounting cavity defining an air inlet and an air outlet to guide cold air to flow through the area where the camera assembly is located to dissipate heat for the camera assembly. This arrangement can reduce the space occupied by the mounting mechanism, improve the simplicity of the mounting mechanism, and reduce the assembly difficulty.

In another embodiment, the mounting base defining a first mounting cavity, the first mounting cavity defining an air inlet and an air outlet, and both the camera assembly and the control assembly can be arranged in the first mounting cavity to realize heat dissipation for the control assembly and the camera assembly. This arrangement can not only reduce the space occupied by the mounting mechanism, but also assemble the control assembly for the camera assembly and dissipate heat for it, thereby improving the intelligence of the camera assembly and the user experience of the intelligent identification function of the cooking device.

In an embodiment, the camera assembly 04 can transmit the collected image information to the corresponding receiving end through wireless network signals. This arrangement can save transmission lines, improve the structural simplicity of the product, and reduce the assembly difficulty.

In other embodiments, similar improvements can be made for cooking devices, which will not be repeated here.

The present application further proposes a camera system, and the structure and working principle of the camera system can refer to the above embodiments.

Different from the related art, the camera mechanism of the present application can collect food images, which can improve the intelligent identification performance of the cooking device; the camera mechanism is arranged at the air outlet of the air duct mechanism, which can directly deliver cold air to the place needing cooling, improve the high-temperature resistance of the camera mechanism, further enhance the anti-interference ability of the camera mechanism, and improve the reliability of the camera mechanism; the air duct mechanism is located outside the top wall of the cavity of the heating cavity, which can reduce the impact of temperature changes in the heating cavity on the air duct mechanism, improve the anti-interference ability of the air duct mechanism, and is convenient for assembly and reduces production costs when placed outside the top wall; further, the air inlet of the air duct mechanism is arranged on the same side as the rear wall of the cavity of the heating cavity, so that cold air flows in from the rear wall of the cavity of the heating cavity, and the air inlet does not occupy the space on the opening side of the cavity of the heating cavity, which can reduce the impact of setting the air inlet on the daily use of users and improve aesthetics. Therefore, the present application can improve the heat dissipation effect, reduce the impact of temperature changes in the heating cavity on the camera mechanism, improve the reliability of the camera mechanism, thereby enhancing the intelligent identification performance of the cooking device, facilitating assembly, improving aesthetics, reducing production costs, and enhancing user experience.

The above descriptions are only the embodiments of the present application, and are not intended to limit the patent scope of the present application. Any equivalent structure or equivalent process transformation made based on the specification and the accompanying drawings of the present application, directly or indirectly applied in other related technical fields, shall be included in the patent protection scope of the present application.

## Claims

1. A camera system for a cooking device, wherein the cooking device comprises a box body and a camera mechanism disposed on a top wall of a cavity body of a heating cavity of the box body, and the camera system comprises:
an air duct mechanism defining an air duct; and
the camera mechanism disposed at an air outlet of the air duct,
wherein the air duct mechanism is positioned outside the top wall of the cavity of the heating cavity, and an air inlet of the air duct is disposed on the same side as a rear wall of the cavity of the heating cavity.

2. The camera system according to claim 1, wherein the air duct comprises a first air duct and a second air duct, and the air duct mechanism comprises:
a housing defining the first air duct, an air inlet of the first air duct acting as the air inlet of the air duct;
a fan disposed in the first air duct; and
an air guide pipe defining the second air duct in fluid communication with the first air duct, an air outlet of the second air duct serving as the air outlet of the air duct.

3. The camera system according to claim 2, wherein:
the first air duct comprises a first sub-air duct and a first accommodating cavity, the first accommodating cavity is further communicated with an external environment, and the first sub-air duct is further communicated with the second air duct; and
the air duct mechanism further comprises a fan bracket disposed in the first accommodating cavity, the fan bracket defines a second accommodating cavity, the fan is disposed in the second accommodating cavity, and the second accommodating cavity comprises an air inlet communicated with the first accommodating cavity and an air outlet communicated with the air guide pipe.

4. The camera system according to claim 3, wherein the fan comprises a direct-current, DC, fan, and a negative pressure cavity communicated with the second accommodating cavity is defined between the fan bracket and an inner wall of the first accommodating cavity,
wherein the negative pressure cavity is positioned at an end of the DC fan, and the air outlet of the second accommodating cavity is positioned at an outer peripheral side of the DC fan.

5. The camera system according to claim 1, wherein the camera mechanism comprises:
a mounting mechanism mounted at a mounting hole of the heating cavity; and
a camera assembly mounted on the mounting mechanism.

6. The camera system according to claim 5, wherein the mounting mechanism comprises a mounting base disposed at the air outlet of the air duct, the camera assembly being mounted on the mounting base.

7. The camera system according to claim 6, wherein the mounting base comprises a first mounting cavity and a second mounting cavity which are communicated with each other, wherein the first mounting cavity comprises an air outlet, the second mounting cavity comprises an air inlet, the first mounting cavity is configured to mount the camera assembly, and the second mounting cavity is configured to mount a control assembly.

8. The camera system according to claim 7, wherein an arc-shaped deflector is disposed in the first mounting cavity to form an arc-shaped air duct in the first mounting cavity.

9. The camera system according to claim 1, wherein the camera mechanism is disposed on the same side as an opening of the cavity of the heating cavity.

10. A cooking device, comprising:
a box body defining a heating cavity; and
the camera system according to any one of claims 1 to 9, the camera system being disposed in the box body.
